# EUROPEAN PATENT APPLICATION

(11) **EP 4 376 310 A1**
(43) Date of publication of application: **29.05.2024**
(21) Application number: 22863098.4
(22) Date of filing: 15.08.2022
(51) Int. Cl.: H04B 1/40

(54) **METHOD AND APPARATUS FOR PROCESSING MUTUAL INTERFERENCE OF CHIPS, AND ELECTRONIC DEVICE AND READABLE STORAGE MEDIUM**

(30) Priority: 31.08.2021 CN 202111015603
(71) Applicant: Huawei Technologies Co., Ltd., Shenzhen, Guangdong 518129 (CN)
(72) Inventor: XIA, Jikang, Shenzhen, Guangdong 518129 (CN); ZHU, Yanhong, Shenzhen, Guangdong 518129 (CN); WANG, Junhui, Shenzhen, Guangdong 518129 (CN); YANG, Jianhua, Shenzhen, Guangdong 518129 (CN)
(74) Representative: Körber, Martin Hans
(86) International application number: PCT/CN2022/112385
(87) International publication number: WO 2023/029958

(57) **Abstract**

Embodiments of this application provide a chip mutual-interference processing method and apparatus, an electronic device, and a readable storage medium. The electronic device includes a first wireless chip and a second wireless chip. In the method, the electronic device may control the first wireless chip to execute a first service on a first channel. The electronic device adjusts a first parameter of the first wireless chip in response to controlling the second wireless chip to execute a second service on a second channel. The first parameter includes a sending rate and/or transmit power, and the second channel does not overlap the first channel. In embodiments of this application, when the electronic device controls the first wireless chip and the second wireless chip to execute services on two non-overlapping channels, the electronic device may adjust the sending rate and/or transmit power of the first wireless chip, so that inter-channel interference between the first wireless chip and the second wireless chip can be reduced.

## Description

This application claims priority to Chinese Patent Application No. 202111015603.5, filed with the China National Intellectual Property Administration on August 31, 2021 and entitled "CHIP MUTUAL-INTERFERENCE PROCESSING METHOD AND APPARATUS, ELECTRONIC DEVICE, AND READABLE STORAGE MEDIUM", which is incorporated herein by reference in its entirety.

### TECHNICAL FIELD

Embodiments of this application relate to wireless communication technologies, and in particular, to a chip mutual-interference processing method and apparatus, an electronic device, and a readable storage medium.

### BACKGROUND

As electronic devices develop, the electronic devices evolve from supporting single-channel wireless communication to supporting dual-channel wireless communication, and the dual-channel wireless communication can improve wireless communication speeds and communication quality of the electronic devices. For example, the electronic devices evolve from performing wireless communication on a channel in a 2.4 GHz frequency band to performing wireless communication on both the channel in the 2.4 GHz frequency band and a channel in a 5 GHz frequency band.

Currently, when an electronic device performs wireless communication with another electronic device on two channels, signals of the two channels interfere with each other. Consequently, wireless communication quality of the two channels of the electronic device is poor.

### SUMMARY

Embodiments of this application provide a chip mutual-interference processing method and apparatus, an electronic device, and a readable storage medium, to reduce inter-channel interference between two chips and improve wireless communication quality.

According to a first aspect, an embodiment of this application provides a chip mutual-interference processing method. The method may be executed by an electronic device, a chip in an electronic device, or a central processing unit CPU. The following uses the electronic device as an example for description. In the method, the electronic device may control a first wireless chip to execute a first service on a first channel. Because the first channel and a second channel do not overlap, inter-channel interference is generated between the first wireless chip and a second wireless chip. The electronic device may adjust a first parameter of the first wireless chip in response to controlling the second wireless chip to execute a second service on the second channel, to reduce the inter-channel interference between the first wireless chip and the second wireless chip. The first parameter includes a sending rate and/or transmit power.

In a possible implementation, that the electronic device controls the second wireless chip to execute the second service on the second channel may be understood as that the electronic device supplies power to the second wireless chip, and controls the second wireless chip to switch from a state of not executing a service to a state of executing the second service. That the electronic device adjusts the first parameter of the first wireless chip may be that the electronic device reduces the sending rate and/or transmit power of the first wireless chip. Because the second wireless chip switches from the state of not executing a service to the state of executing the second service, inter-channel interference is generated between the first wireless chip and the second wireless chip. To reduce the inter-channel interference, the electronic device may reduce the first parameter of the first wireless chip, to improve communication quality of the first wireless chip and the second wireless chip.

In a possible implementation, that the electronic device controls the second wireless chip to execute the second service on the second channel may be understood as that the electronic device controls the second wireless chip to switch from a state of executing another service to a state of executing the second service. That the electronic device adjusts the first parameter of the first wireless chip may be that the electronic device adaptively adjusts the first parameter of the first wireless chip based on the second service and a mapping relationship between a second service and a first parameter, so that inter-channel interference between the first wireless chip and the second wireless chip can also be reduced.

In an embodiment, when both the first wireless chip and the second wireless chip work, that is, the electronic device controls the first wireless chip to execute the first service on the first channel, and the electronic device controls the second wireless chip to execute the second service on the second channel, in this scenario, the electronic device may reduce the first parameter of the first wireless chip in response to detecting that a low noise amplifier in the second wireless chip is saturated.

That the low noise amplifier in the second wireless chip is saturated indicates that a radio frequency signal transmitted by the first wireless chip causes great interference to a signal of the second wireless chip. Therefore, the electronic device may reduce the first parameter of the first wireless chip, to reduce interference to the second wireless chip caused by the radio frequency signal transmitted by the first wireless chip.

In an embodiment, when both the first wireless chip and the second wireless chip work, that is, the electronic device controls the first wireless chip to execute the first service on the first channel, and the electronic device controls the second wireless chip to execute the second service on the second channel, in this scenario, the electronic device may detect a received signal strength indication RSSI of a low noise amplifier in the second wireless chip, and adjust the first parameter of the first wireless chip based on the RSSI of the low noise amplifier in the second wireless chip.

First, if the electronic device detects that the RSSI of the low noise amplifier in the second wireless chip is greater than or equal to first preset signal strength, it is determined that a radio frequency signal transmitted by the first wireless chip causes great interference to a signal of the second wireless chip. Therefore, the electronic device may reduce the first parameter of the first wireless chip, to reduce interference to the second wireless chip caused by the radio frequency signal transmitted by the first wireless chip.

Second, if the electronic device detects that the RSSI of the low noise amplifier in the second wireless chip is less than second preset signal strength, the electronic device may not limit the first parameter of the first wireless chip. The second preset signal strength is less than the first preset signal strength.

Third, if the electronic device detects that the RSSI of the low noise amplifier in the second wireless chip is greater than or equal to the second preset signal strength and is less than the first preset signal strength, the electronic device may adjust the first parameter of the first wireless chip based on the RSSI of the low noise amplifier in the second wireless chip, the second service, and a mapping relationship among an RSSI, a service, and a first parameter, to reduce inter-channel interference between the first wireless chip and the second wireless chip as much as possible.

In the foregoing embodiment, that the electronic device reduces the first parameter of the first wireless chip may be understood as that the electronic device reduces the first parameter of the first wireless chip based on the second service and a mapping relationship between a second service and a first parameter.

It should be understood that, if a priority of the second service is high, the electronic device may reduce the sending rate and/or transmit power of the first wireless chip to a maximum extent while ensuring that the first wireless chip can execute the first service, and ensure smooth execution of the second service while reducing inter-channel interference between the first wireless chip and the second wireless chip. If a priority of the second service is low, the electronic device may reduce the sending rate and/or transmit power of the first wireless chip to a small extent while ensuring that the first wireless chip can execute the first service, so that execution of the second service is not affected, and inter-channel interference between the first wireless chip and the second wireless chip can be reduced.

In a possible implementation, both the first wireless chip and the second wireless chip may be Wi-Fi chips.

According to a second aspect, an embodiment of this application provides a chip mutual-interference processing apparatus. An electronic device includes a first wireless chip and a second wireless chip, and the apparatus includes:
a CPU, configured to:
control the first wireless chip to execute a first service on a first channel; and
adjust a first parameter of the first wireless chip in response to controlling the second wireless chip to execute a second service on a second channel, where the first parameter includes: a sending rate and/or transmit power, and the second channel does not overlap the first channel.

In a possible implementation, the CPU is specifically configured to: control the second wireless chip to start to execute the second service on the second channel, and reduce the first parameter of the first wireless chip in response to powering on the second wireless chip.

In a possible implementation, the CPU is further configured to reduce the first parameter of the first wireless chip in response to detecting that a low noise amplifier in the second wireless chip is saturated.

In a possible implementation, the CPU is further configured to: detect a received signal strength indication RSSI of a low noise amplifier in the second wireless chip; and adjust the first parameter of the first wireless chip based on the RSSI of the low noise amplifier in the second wireless chip.

In a possible implementation, the CPU is specifically configured to reduce the first parameter of the first wireless chip in response to that the RSSI of the low noise amplifier in the second wireless chip is greater than or equal to first preset signal strength.

In a possible implementation, the CPU is specifically configured to reduce the first parameter of the first wireless chip based on the second service and a mapping relationship between a service and a first parameter.

In a possible implementation, the CPU is specifically configured to adjust the first parameter of the first wireless chip based on the RSSI of the low noise amplifier in the second wireless chip, the second service, and a mapping relationship among an RSSI, a service, and a first parameter in response to that the RSSI of the low noise amplifier in the second wireless chip is greater than or equal to second preset signal strength and is less than first preset signal strength, where the second preset signal strength is less than the first preset signal strength.

In a possible implementation, both the first wireless chip and the second wireless chip are Wi-Fi chips.

According to a third aspect, an embodiment of this application provides an electronic device, where the electronic device may include a processor, a memory, a first wireless chip, and a second wireless chip. The processor is separately connected to the first wireless chip and the second wireless chip. The memory is configured to store computer-executable program code, and the program code includes instructions. When the processor executes the instructions, the instructions enable the electronic device to perform the method in the first aspect.

According to a fourth aspect, an embodiment of this application provides an electronic device. The electronic device may be the chip mutual-interference processing apparatus provided in the second aspect or the electronic device in the first aspect. The electronic device may include a unit, a module, or a circuit configured to perform the method provided in the first aspect.

According to a fifth aspect, an embodiment of this application further provides a computer program product including instructions. When the computer program product is run on a computer, the computer is enabled to perform the method in the first aspect.

According to a sixth aspect, an embodiment of this application further provides a computer-readable storage medium, and the computer-readable storage medium stores instructions. When the instructions are run on a computer, the computer is enabled to perform the method in the first aspect.

For beneficial effects of each possible implementation of the second aspect to the sixth aspect, refer to beneficial effects brought by the first aspect. Details are not described herein again.

Embodiments of this application provide the chip mutual-interference processing method and apparatus, the electronic device, and the readable storage medium. The electronic device includes the first wireless chip and the second wireless chip. In the method, the electronic device may control the first wireless chip to execute the first service on the first channel. The electronic device adjusts the first parameter of the first wireless chip in response to controlling the second wireless chip to execute the second service on the second channel. The first parameter includes the sending rate and/or transmit power, and the second channel does not overlap the first channel. In this embodiment of this application, when the electronic device controls the first wireless chip and the second wireless chip to execute services on non-overlapping channels, the electronic device may adjust the sending rate and/or transmit power of the first wireless chip, so that inter-channel interference between the first wireless chip and the second wireless chip can be reduced.

### BRIEF DESCRIPTION OF DRAWINGS

FIG. 1 is a schematic diagram of distribution of current channels in a current 5 GHz frequency band;
FIG. 2 is a schematic diagram of layouts of electronic devices according to an embodiment of this application;
FIG. 3 is a schematic diagram of a structure of an electronic device according to an embodiment of this application;
FIG. 4 is a schematic flowchart of an embodiment of a chip mutual-interference processing method according to an embodiment of this application;
FIG. 5 is a schematic diagram of a relationship between a sending rate of a Wi-Fi chip 1 and a decrease ratio of an ultimate throughput rate of a Wi-Fi chip 2 according to an embodiment of this application;
FIG. 6 is a schematic flowchart of another embodiment of a chip mutual-interference processing method according to an embodiment of this application;
FIG. 7A is a schematic diagram of another structure of an electronic device according to an embodiment of this application;
FIG. 7B is a schematic flowchart of another embodiment of a chip mutual-interference processing method according to an embodiment of this application;
FIG. 8 is a schematic diagram of another structure of an electronic device according to an embodiment of this application;
FIG. 9 is a schematic flowchart of another embodiment of a chip mutual-interference processing method according to an embodiment of this application;
FIG. 10 is a schematic flowchart of another embodiment of a chip mutual-interference processing method according to an embodiment of this application; and
FIG. 11 is a schematic diagram of another structure of an electronic device according to an embodiment of this application.

### DESCRIPTION OF EMBODIMENTS

An electronic device that supports single-channel wireless communication may communicate with another electronic device on a channel supported by the electronic device. For example, if the electronic device is a mobile phone, and the mobile phone supports a 2.4 GHz frequency band, the mobile phone may communicate with another electronic device on a channel in the 2.4 GHz frequency band. Currently, most electronic devices that support single-channel wireless communication work on the 2.4 GHz frequency band. Because the 2.4 GHz frequency band includes only three non-overlapping 20 M frequency bands (band), communication interference is severe. Currently, a dual-channel technical solution is provided, so that an electronic device can support dual channels, that is, the electronic device can simultaneously perform communication on different channels, to enhance communication quality of the electronic device. For example, the electronic device may simultaneously perform communication on a channel in the 2.4 GHz frequency band and a channel in a 5 GHz frequency band, or the electronic device may simultaneously perform communication on two channels in a 5 GHz frequency band, or the electronic device may simultaneously perform communication on channels in the 2.4 GHz frequency band. In the following embodiment, an example in which "an electronic device simultaneously performs communication on two channels in a 5 GHz frequency band" is used to describe a chip mutual-interference processing method provided in this embodiment of this application.

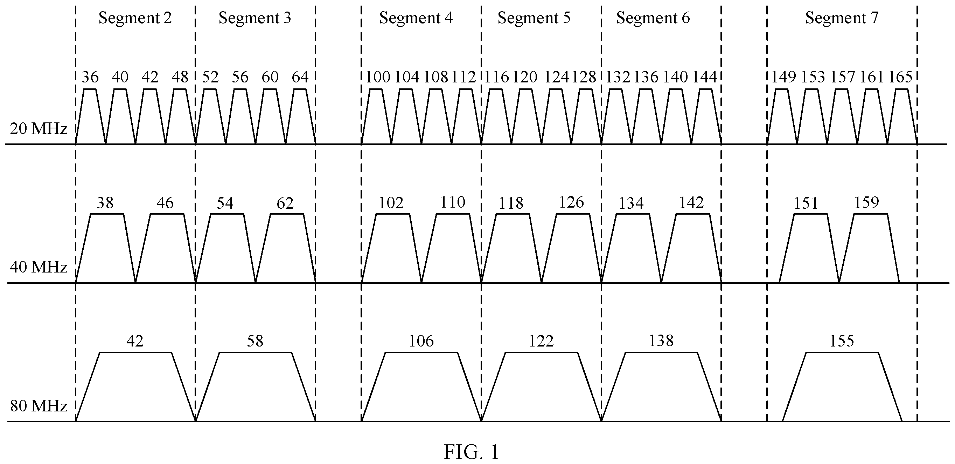

FIG. 1 is a schematic diagram of distribution of current channels in a 5 GHz frequency band. As shown in FIG. 1, currently, the 5 GHz frequency band includes seven segments, which are respectively a segment 1, a segment 2, ..., and a segment 7. The segment 1 includes 4.9 GHz to 5.15 GHz. In the segment 2 to the segment 7, each segment includes a plurality of channels, and each channel may occupy a bandwidth of 20 MHz, a bandwidth of 40 MHz, or a bandwidth of 80 MHz. A bandwidth of a channel of the electronic device is not limited in this embodiment of this application. An example in which each channel in FIG. 1 occupies the bandwidth of 20 MHz is used for description. The segment 2 may include channel 36 (channel 36, ch 36), ch 40, ..., and ch 48. The segment 3 may include: ch 52, ch 56, ..., and ch 64. The segment 4 may include: ch 100, ch 104, ..., and ch 112. The segment 5 may include: ch 116, ch 120, ..., and ch 128. The segment 6 may include: ch 132, ch 136, ..., and ch 144. The segment 7 may include: ch 149, ch 153, ..., and ch 165. It should be understood that the segment 1 is not shown in FIG. 1.

For example, the electronic device simultaneously performs communication on two different channels in the 5 GHz frequency band. For example, the electronic device may simultaneously perform communication on the ch 36 and the ch 149. The reason why the electronic device can simultaneously perform communication on two different channels in the 5 GHz frequency band is that the electronic device includes two Wi-Fi chips. The electronic device may control one of the Wi-Fi chips to perform communication on the ch 36, and control the other Wi-Fi chip to perform communication on the ch 149.

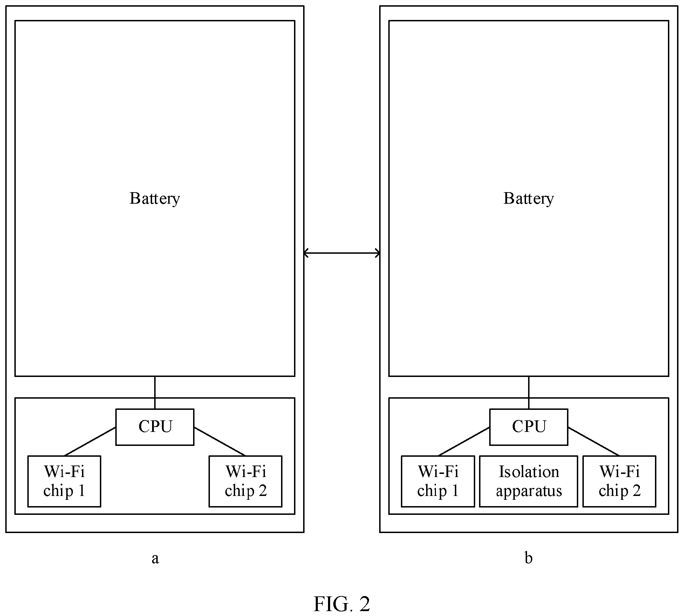

FIG. 2 is a schematic diagram of layouts of electronic devices according to an embodiment of this application. As shown in a in FIG. 2, the electronic device includes a battery and a mainboard, and a central processing unit (central processing unit, CPU) and two Wi-Fi chips, such as a Wi-Fi chip 1 and a Wi-Fi chip 2, are disposed on the mainboard. The battery is connected to the CPU, and the CPU is separately connected to the Wi-Fi chip 1 and the Wi-Fi chip 2.

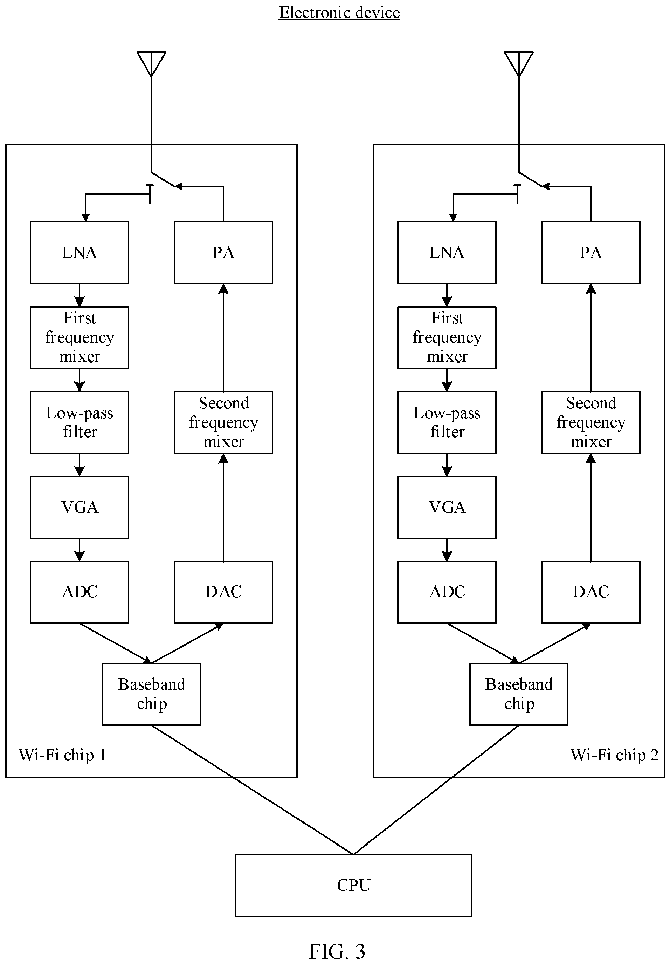

The Wi-Fi chip 1 and the Wi-Fi chip 2 have a same structure. The following uses the Wi-Fi chip 1 as an example to describe a structure of the electronic device and a structure of the Wi-Fi chip. As shown in FIG. 3, the Wi-Fi chip 1 may include a baseband chip, an analog-to-digital converter (analog-to-digital converter, ADC), a variable gain amplifier (variable gain amplifier, VGA), a low-pass filter, a first frequency mixer, a low noise amplifier (low noise amplifier, LNA), a power amplifier (power amplifier, PA), a second frequency mixer, a digital-to-analog converter (digital-to-analog converter, DAC), and an antenna. It can be understood that the structure shown in this embodiment does not constitute a specific limitation on the Wi-Fi chip. In some other embodiments of this application, the Wi-Fi chip may include more or fewer components than those shown in the figure, or a combination of some components, or splits from some components, or an arrangement of different components. The components shown in the figure may be implemented by using hardware, software, or a combination of software and hardware. It should be understood that FIG. 3 does not show the battery in the electronic device.

The CPU is separately connected to the baseband chip in the Wi-Fi chip 1 and a baseband chip in the Wi-Fi chip 2. The CPU is configured to: transmit a radio frequency signal through a transmission path including "the baseband chip, the DAC, the second frequency mixer, the PA, and the antenna", and receive a radio frequency signal from another electronic device through a receiving path including "the antenna, the LNA, the first frequency mixer, the low-pass filter, the VGA, the ADC, and the baseband chip", to implement wireless communication between the electronic device and the another electronic device.

For transmitting a radio frequency signal by the electronic device, the CPU may send data to the baseband chip, the baseband chip may code and modulate the data to generate a digital baseband signal, and the baseband chip may send the digital baseband signal to the DAC. The DAC converts the digital baseband signal into an analog baseband signal, and sends the analog baseband signal to the second frequency mixer. The second frequency mixer performs upconversion on the analog baseband signal, to convert the analog baseband signal into a high-frequency radio frequency signal, and the antenna may transmit the high-frequency radio frequency signal. For receiving a radio frequency signal by the electronic device, the antenna may receive a high-frequency radio frequency signal from another electronic device, the LNA may perform first-level power amplification on the high-frequency radio frequency signal, and the first frequency mixer may perform down-conversion on an amplified high-frequency radio frequency signal, to convert the amplified high-frequency radio frequency signal into an analog baseband signal. The low-pass filter may allow an analog baseband signal whose frequency is lower than a preset frequency to pass through, and perform filtering on an analog baseband signal whose frequency is higher than the preset frequency. The VGA may perform second-level power amplification on the analog baseband signal whose frequency is lower than the preset frequency, and input the analog baseband signal to the ADC. The ADC is configured to convert the analog baseband signal into a digital baseband signal, and input the digital baseband signal to the baseband chip. The baseband chip may demodulate and decode the received digital baseband signal to obtain data, and send the data to the CPU. The CPU may perform a corresponding operation based on the received data. A principle of transmitting a radio frequency signal and receiving a radio frequency signal by the electronic device is briefly described in this embodiment of this application. For a further detailed principle, refer to related descriptions in the conventional technology.

As shown in a in FIG. 2 and FIG. 3, because the battery occupies most space of the electronic device, space reserved for the mainboard is very small. Consequently, a distance between antennas in two Wi-Fi chips is very close. When the Wi-Fi chip 1 and the Wi-Fi chip 2 simultaneously work, transmission of a radio frequency signal of one Wi-Fi chip causes deterioration of communication quality of the other Wi-Fi chip.

When the Wi-Fi chip 1 and the Wi-Fi chip 2 work on a same channel, for example, when both the Wi-Fi chip 1 and the Wi-Fi chip 2 work on the ch 36 channel in the 5 GHz frequency band, signals between the Wi-Fi chip 1 and the Wi-Fi chip 2 generate co-channel interference. Currently, the Wi-Fi chip 1 and the Wi-Fi chip 2 may preempt a channel based on a carrier sense multiple access/collision avoidance (carrier sense multiple access with collision avoidance, CSMA/CA) contention mechanism of the IEEE 802.11 protocol, and only one Wi-Fi chip transmits a radio frequency signal on the ch 36 channel at a same moment. Therefore, co-channel interference between the Wi-Fi chip 1 and the Wi-Fi chip 2 can be avoided.

When the Wi-Fi chip 1 and the Wi-Fi chip 2 work on different channels, and the channels overlap, for example, when the Wi-Fi chip 1 works on the ch 36 in the 5 GHz frequency band, and the Wi-Fi chip 2 works on ch 38 in the 5 GHz frequency band, as shown in FIG. 1, because the ch 36 and ch 38 overlap, the Wi-Fi chip 1 and the Wi-Fi chip 2 can monitor signals of each other, the Wi-Fi chip 1 and the Wi-Fi chip 2 may preempt a channel based on the CSMA/CA contention mechanism of the IEEE 802.11 protocol. Only one Wi-Fi chip transmits a radio frequency signal at a same moment. Therefore, interference between the Wi-Fi chip 1 and the Wi-Fi chip 2 can be avoided.

When the Wi-Fi chip 1 and the Wi-Fi chip 2 work on different channels, and the channels do not overlap, for example, when the Wi-Fi chip 1 works on the ch 36 in the 5 GHz frequency band, and the Wi-Fi chip 2 works on ch 48 (or ch 149) in the 5 GHz frequency band, or when the Wi-Fi chip 1 works on a channel in the 2.4 GHz frequency band, and the Wi-Fi chip 2 works on a channel in the 5 GHz frequency band, or when the Wi-Fi chip 1 and the Wi-Fi chip 2 work on non-overlapping channels in the 2.4 GHz frequency band, inter-channel interference is generated between the Wi-Fi chip 1 and the Wi-Fi chip 2. The inter-channel interference may be understood as follows: Transmission of a radio frequency signal of the Wi-Fi chip 1 that works on a non-overlapping channel causes deterioration of communication quality of the Wi-Fi chip 2, and transmission of a radio frequency signal of the Wi-Fi chip 2 causes deterioration of communication quality of the Wi-Fi chip 1.

The inter-channel interference may also be understood as a case that a radio frequency signal transmitted by the Wi-Fi chip 1 causes saturation of the LNA at a radio frequency front-end in the Wi-Fi chip 2, and a radio frequency signal transmitted by the Wi-Fi chip 2 causes saturation of the LNA at a radio frequency front-end in the Wi-Fi chip 1. For example, if signal strength of a radio frequency signal received by the LNA is greater than or equal to predetermined signal strength, for example, the predetermined signal strength is -15 dBm, and the signal strength of the radio frequency signal received by the LNA is 0 dBm, saturation of the LNA is caused. When the LNA is saturated, the radio frequency signal amplified by the LNA is distorted. As a result, the baseband chip cannot demodulate the signal.

For example, the Wi-Fi chip 1 executes a file transfer service on the ch 36, and the Wi-Fi chip 2 executes a projection service on the ch 149. Inter-channel interference between the Wi-Fi chip 1 and the Wi-Fi chip 2 causes poor communication quality (or communication performance) of the Wi-Fi chip 1 and the Wi-Fi chip 2, for example, causes a low file transfer speed of the Wi-Fi chip 1. In addition, a quantity of projection freezing times of a peer device that communicates with the Wi-Fi chip 2 increases, and a projection frame rate fps decreases. The projection frame rate fps may be 60, 30, or the like. A projection frame rate of 60 fps is used as an example. The projection frame rate of 60 fps may be understood as follows: The electronic device refreshes a projection interface at a refresh rate of 60 Hz, that is, displays 60 frames of the projection interface per second.

As shown in b in FIG. 2, in an embodiment, to reduce inter-channel interference between the Wi-Fi chip 1 and the Wi-Fi chip 2, an isolation apparatus may be disposed between the Wi-Fi chip 1 and the Wi-Fi chip 2, and the isolation apparatus may include a metal layer. The isolation apparatus may reduce some inter-channel interference to some extent. However, currently, space reserved for the mainboard in the electronic device is small. Consequently, space occupied by the isolation apparatus is also limited. Therefore, currently, isolation of the isolation apparatus from inter-channel interference between the Wi-Fi chip 1 and the Wi-Fi chip 2 is limited. It should be understood that the isolation apparatus is not shown in FIG. 3. For example, if signal strength of a radio frequency signal transmitted by the Wi-Fi chip 2 is 20 dBm, and isolation of the isolation apparatus is 20 dB, the Wi-Fi chip 1 receives a radio frequency signal whose signal strength is 0 dBm from the Wi-Fi chip 2. The signal strength of the radio frequency signal is greater than -15 dBm, and the LNA is saturated. This affects communication quality of the Wi-Fi chip 1.

Based on the foregoing problem, in a scenario in which an electronic device includes two Wi-Fi chips, higher power of transmitting a radio frequency signal by one Wi-Fi chip has greater impact on communication quality of the other Wi-Fi chip, and a higher rate of transmitting a radio frequency signal by one Wi-Fi chip has greater impact on the communication quality of the other Wi-Fi chip. Therefore, a sending rate and transmit power of the Wi-Fi chip have important impact on the communication quality of the other Wi-Fi chip. Based on this, an embodiment of this application provides a chip mutual-interference processing method, to reduce impact of inter-channel interference on the communication quality of the other Wi-Fi chip by reducing transmit power and/or a sending rate of a radio frequency signal of the Wi-Fi chip. This improves communication quality of the Wi-Fi chip, to resolve a problem that communication performance of two wireless chips deteriorates due to insufficient isolation (because space of a mainboard is limited) in a scenario of inter-channel interference of the two wireless chips in an electronic device.

It should be understood that the chip mutual-interference processing method provided in this embodiment of this application may be applied to a scenario in which there are two Wi-Fi chips, and may also be applied to a scenario in which there are a Bluetooth chip, a cellular mobile network 5G chip, and at least two wireless chips having a radio frequency structure that is the same as or similar to that shown in the Wi-Fi chip in FIG. 3. For example, a scenario to which this embodiment of this application is applied may be a scenario in which there are at least two wireless chips, such as a Bluetooth chip and a Wi-Fi chip, two Bluetooth chips, two cellular mobile network 5G chips, a Bluetooth chip and a cellular mobile network 5G chip, or two Bluetooth chips and two Wi-Fi chips. This is not limited in this embodiment of this application. A scenario in which there are two Wi-Fi chips is used as an example for description in the following embodiments.

In an embodiment, the electronic device in embodiments of this application may be referred to as user equipment (user equipment, UE), a terminal (terminal), or the like. For example, the electronic device may be an electronic device having two wireless chips like a mobile phone, a tablet computer (portable android device, PAD), a personal digital assistant (personal digital assistant, PDA), a handheld device, a computing device, a vehicle-mounted device, or a wearable device with a wireless communication function, a virtual reality (virtual reality, VR) terminal device, an augmented reality (augmented reality, AR) terminal device, a wireless terminal in industrial control (industrial control), or a wireless terminal in a smart home (smart home). A form of the electronic device is not specifically limited in this embodiment of this application.

The following describes the chip mutual-interference processing method provided in this embodiment of this application with reference to specific embodiments. The following several embodiments may be combined with each other, and a same or similar concept or process may not be described in detail in some embodiments.

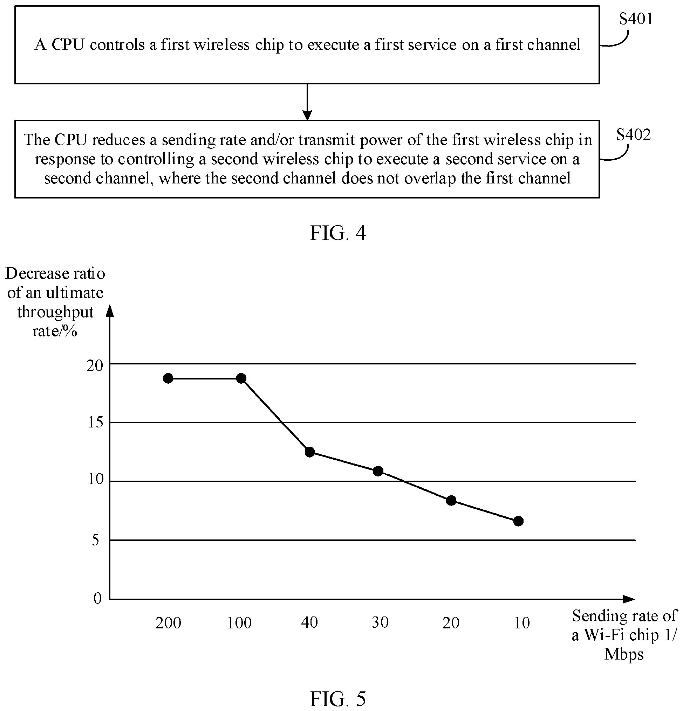

FIG. 4 is a schematic flowchart of an embodiment of a chip mutual-interference processing method according to an embodiment of this application. As shown in FIG. 4, the chip mutual-interference processing method provided in this embodiment of this application may include the following steps.

S401: A CPU controls a first wireless chip to execute a first service on a first channel.

An electronic device includes the first wireless chip and a second wireless chip. After the electronic device is powered on, the CPU may control, based on a service that needs to be executed, the first wireless chip and/or the second wireless chip to work. When there are few services, the CPU may control the first wireless chip to execute the first service on the first channel. In this case, the second wireless chip is in a power-off state. For example, the first wireless chip may be the Wi-Fi chip 1 in FIG. 3, and the first channel may be ch 36 in a 5 GHz frequency band.

The first service may include but is not limited to: a proximity discovery service, a service in a news application, a shopping application, a social application, or the like, a file sharing service, a mobile phone cloning service, a download service, a game service, a live broadcast service, and the like.

It should be understood that, when the second wireless chip is in a power-off state, the CPU may not limit a sending rate and transmit power of the first wireless chip. In an embodiment, the CPU may control a sending rate and transmit power of the first wireless chip based on a received signal strength indication (received signal strength indication, RSSI) of a signal from a peer device of the first wireless chip. For example, when the RSSI of the signal from the peer device is very large, for example, -40 dBm, and communication quality of the first wireless chip is good, the CPU may control a baseband chip to reduce transmit power of the baseband chip, to reduce power consumption. When the RSSI of the signal from the peer device is very small, for example, -45 dBm, the CPU may control the baseband chip to increase the transmit power of the baseband chip, to improve quality of communication with the peer device. In this embodiment of this application, a manner of controlling the transmit power and sending rate when only the first wireless chip in the electronic device works is not described in detail. For details, refer to related descriptions in the conventional technology.

S402: The CPU reduces the sending rate and/or transmit power of the first wireless chip in response to controlling the second wireless chip to execute a second service on a second channel, where the second channel does not overlap the first channel.

The second channel does not overlap the first channel. In an embodiment, the first channel and the second channel may be channels in different frequency bands. For example, the first channel is a channel in a 5 GHz frequency band, and the second channel is a channel in a 2.4 GHz frequency band. In an embodiment, the first channel and the second channel may be non-overlapping channels in a same frequency band. For example, the first channel is ch 36 in a 5 GHz frequency band, and the second channel is ch 149 (or ch 58, ch 102, or the like) in the 5 GHz frequency band.

When there are many services, the first wireless chip cannot execute all the services, and the CPU may allocate some services to the second wireless chip for execution. Before the second wireless chip executes the services, the second wireless chip is in a power-off state. When the CPU needs to execute a service by using the second wireless chip, the CPU may control a battery to supply power to the second wireless chip, so that the second wireless chip is in a poweron state, to start to execute the service.

After the second wireless chip is powered on, the CPU may control the second wireless chip to execute the second service on the second channel. The second service may be the same as or different from the first service. For example, the second wireless chip may be the Wi-Fi chip 2 in FIG. 3, and the second channel may be ch 149 in a 5 GHz frequency band.

The second service may include but is not limited to a positioning service, an intelligent network selection (or background scanning/interference detection) service, a proximity discovery service, a device to device (device to device, D2D) service, a projection service, a game service, a live broadcast service, and the like.

In an embodiment, for a same service, the service may further include a plurality of subtypes of services. For example, the projection service may include a 60 fps projection service, a 30 fps projection service, and the like. It should be understood that service changing in this embodiment of this application may be understood as changing to different services, or changing to different subtypes of services in a same service.

In an embodiment, the first wireless chip may be a Wi-Fi primary chip or a Wi-Fi secondary chip in the electronic device. When the first wireless chip is a Wi-Fi primary chip, the second wireless chip is a Wi-Fi secondary chip. When the first wireless chip is a Wi-Fi secondary chip, the second wireless chip is a Wi-Fi primary chip. The following uses an example in which the Wi-Fi primary chip is a Wi-Fi primary chip 1 and the Wi-Fi secondary chip is a Wi-Fi chip 2 for description. Table 1 is an example application scenario of the Wi-Fi primary chip 1 and a Wi-Fi primary chip 2. It should be understood that service remarks are explanations of services, descriptions of application scenarios of services, or the like.

**Table 1**

| Services | Wi-Fi chip 1 | Wi-Fi chip 2 | Service remarks |
|---|---|---|---|
| Background scanning/Interference detection | Not work | Work | Used for a location service, intelligent network selection, and the like |
| Proximity discovery | Work | Work | All-scenario, smart home, and more rapid discovery |
| D2D | Not work | Work | Multi-link and any connection |
| Multi-screen collaboration/Wireless projection | Not work | Work | Wi-Fi projection |
| Conventional Wi-Fi service | Work | Not work | Services in news, shopping, and social applications |
| Huawei Share and Phone Clone | Work | Not work | High-speed data transmission |
| Download service | Work | Not work | Such as application market, web disk, cloud disk, Xunlei, and video offline cache |
| Game and live broadcast service | Work | Work | For example, a feature of dual Wi-Fi |

For example, after the electronic device is powered on, the CPU may control the Wi-Fi chip 1 to execute a service in a news application on the first channel. When the electronic device needs to execute a game service, the CPU may control the battery to supply power to the Wi-Fi chip 2, so that the Wi-Fi chip 2 executes the game service on the second channel. In this scenario, if the Wi-Fi chip 1 does not complete executing the service in the news application, the CPU may control the Wi-Fi chip 1 to execute the service in the news application and the game service on the first channel. If the Wi-Fi chip 1 has completed executing the service in the news application, the CPU may control the Wi-Fi chip 1 to execute the game service on the first channel.

For example, after the electronic device is powered on, the CPU may control the Wi-Fi chip 2 to execute a location service on the first channel. When the electronic device needs to execute a proximity discovery service, the CPU may control the battery to supply power to the Wi-Fi chip 1, so that the Wi-Fi chip 1 executes the proximity discovery service on the second channel. In this scenario, if the Wi-Fi chip 2 does not complete executing the location service, the CPU may control the Wi-Fi chip 2 to execute the location service and the proximity discovery service on the first channel. If the Wi-Fi chip 2 has completed executing the location service, the CPU may control the Wi-Fi chip 2 to execute the proximity discovery service on the first channel.

In this way, the CPU may control the first wireless chip to execute the first service on the first channel, and control the second wireless chip to execute the second service on the second channel. The first wireless chip and the second wireless chip work simultaneously.

In this embodiment of this application, when the CPU controls the second wireless chip to execute the second service on the second channel (or the CPU detects that the second wireless chip is powered on), the first wireless chip and the second wireless chip work simultaneously. To avoid inter-channel interference between the first wireless chip and the second wireless chip, the CPU may reduce a sending rate and/or transmit power of the first wireless chip. For details, refer to related descriptions in the following manner 1 and manner 2.

In an embodiment, S402 may be replaced with a case in which the CPU detects that the second wireless chip is powered on, and reduces the sending rate and/or transmit power of the first wireless chip. In an embodiment, the sending rate and/or transmit power of the first wireless chip may be referred to as a first parameter of the first wireless chip. It should be understood that the first parameter may further include another parameter that causes interference to a signal received by the wireless chip.

### Manner 1:

In an embodiment, that the CPU reduces the sending rate is used as an example, and the CPU may adjust the sending rate of the first wireless chip to a preset sending rate. For example, the preset sending rate may be a preset proportion of a maximum sending rate supported by the first wireless chip. For example, if the maximum sending rate supported by the first wireless chip is 500 Mbps, and the preset proportion is 50%, the CPU may adjust the sending rate of the first wireless chip to 250 Mbps that is preset. Alternatively, in an embodiment, that the CPU reduces the sending rate may be understood as that the CPU reduces a maximum sending rate of the first wireless chip.

In this embodiment, that the CPU reduces the transmit power is used as an example, and the CPU may reduce preset power based on current transmit power of the first wireless chip. For example, if the current transmit power of the first wireless chip is 20 dBm, and the preset power is 6 dB, the CPU may adjust the transmit power of the first wireless chip to 14 dBm that is preset.

In this embodiment, that the CPU reduces the sending rate and transmit power is used as an example, and the CPU may adjust the sending rate of the first wireless chip to the preset sending rate, and reduce the preset power based on the current transmit power of the first wireless chip. For example, the CPU may adjust the sending rate of the first wireless chip to 250 Mbps that is preset, and adjust the transmit power of the first wireless chip to 14 dBm that is preset.

### Manner 2:

In an embodiment, the CPU may determine a priority of the second service based on the second service, to adaptively reduce the sending rate and/or transmit power of the first wireless chip based on the priority of the second service. If the priority of the second service is high, the CPU may reduce the sending rate and/or transmit power of the first wireless chip to a maximum extent while ensuring that the first wireless chip can execute the first service, to ensure smooth execution of the second service. If the priority of the second service is low, the CPU may reduce the sending rate and/or transmit power of the first wireless chip to a small extent while ensuring that the first wireless chip can execute the first service, so that execution of the second service is not affected. In this embodiment, the sending rate and/or transmit power are/is not reduced in a one-size-fits-all manner, but the sending rate and/or transmit power of the first wireless chip are/is adaptively reduced based on the second service. On the premise that inter-channel interference is reduced, execution efficiency and success rates of the first service and the second service can be improved. This improves processing precision and processing accuracy.

In the manner 2, that the CPU reduces the sending rate and transmit power of the first wireless chip is used as an example, and Table 2 shows an example of a configuration table stored in the CPU. The configuration table indicates different services, service priorities, and a mapping relationship between a sending rate and reduced transmit power. In this embodiment of this application, the CPU may adaptively reduce the sending rate and transmit power of the first wireless chip based on the second service as shown in Table 2. It should be understood that Table 2 is an indication form of different services, service priorities, and a mapping relationship between a sending rate and reduced transmit power. The mapping relationship may alternatively be indicated in another form, for example, an extensible language (extensible markup language, XML) file.

**Table 2**

| Priority identifier | Service | Sending rate and transmit power |
|---|---|---|
| 0 | Emergency service | Sending rate x 30% and transmit power - 9 dB |

| Priority identifier | Service | Sending rate and transmit power |
|---|---|---|
| 1 | 60 fps projection service | Sending rate x 40% and transmit power - 9 dB |
| 2 | 30 fps projection service | Sending rate x 50% and transmit power - 6 dB |
| 3 | Audio-playing | Sending rate x 60% and transmit power - 6 dB |
| 4 | File transfer | Sending rate x 80% and transmit power - 3 dB |
| 5 | Message transmission | Transmit rate x 90% and unlimited transmit power |
| 6 to 14 | Reservation | Unlimited sending rate and transmit power |
| 15 | Keepalive | Unlimited sending rate and transmit power |

As shown in Table 2, for example, the priority identifier is indicated by a number. A smaller number indicates a higher priority of a service. The emergency service may be, for example, a service of waking up a peer device of the second wireless chip by the second wireless chip. The reservation may be understood as that services corresponding to priorities 6 to 14 are not set. The "keepalive" may be understood as that the second wireless chip does not execute a service, that is, the second wireless chip is powered on but has not executed a service. The rate shown in Table 2 is a maximum sending rate supported by the first wireless chip.

In the manner 1 and manner 2, in an embodiment, the CPU may reduce the transmit power of the first wireless chip in the following manner. For example, the CPU may control a PA to reduce a power amplification multiple, or the CPU may reduce a quantity of antennas for transmitting a radio frequency signal.

In the manner 1 and manner 2, in an embodiment, the CPU may reduce the sending rate of the first wireless chip in the following manner.

In an embodiment, for a projection service, the sending rate of the first wireless chip is very small, for example, less than 10 Mbps, so that the CPU may reduce only the transmit power of the first wireless chip, and may not reduce the sending rate.

In an embodiment, a manner in which the CPU reduces the sending rate of the first wireless chip may be that the CPU reduces a maximum throughput rate of the first wireless chip to a preset throughput rate. When an amount of sent data is greater than the preset throughput rate, to-be-sent data may be buffered and sent gradually.

The foregoing two types of reducing the sending rate of the first wireless chip by the CPU are used as examples for description. The CPU may reduce the sending rate of the first wireless chip in another manner. This is not limited in this embodiment of this application.

In this embodiment of this application, when the first wireless chip and the second wireless chip in the electronic device work simultaneously, the CPU may reduce the sending rate and/or transmit power of the first wireless chip, so that inter-channel interference between the first wireless chip and the second wireless chip can be reduced. In addition, the CPU may further adaptively reduce the sending rate and/or transmit power of the first wireless chip based on the service executed by the second wireless chip. On the premise that inter-channel interference is reduced, smooth execution of the first service and the second service can be ensured. This improves processing precision and processing accuracy.

For example, in a simulation test, when the Wi-Fi chip 1 executes a first service (for example, a file transfer service) on ch 36, and the Wi-Fi chip 2 executes a second service (for example, a projection service) on ch 149, after the CPU reduces a sending rate and/or transmit power of the Wi-Fi chip 1, a quantity of projection freezing times of a peer device of the Wi-Fi chip 2 decreases, and a projection frame rate fps increases, as shown in Table 3 below.

It should be understood that Table 3 is described by using an example in which a sending rate of the Wi-Fi chip 1 is reduced, the sending rate of the Wi-Fi chip 1 is reduced to 200 Mbps, 150 Mbps, and 50 Mbps separately, and there is no inter-channel interference between the Wi-Fi chip 1 and the Wi-Fi chip 2 (for comparison).

**Table 3**

| Sending rate of the Wi-Fi chip 1 | Projection frame rate/fps | A quantity of freezing times within 15 minutes (a display interval is greater than 150 ms) | A quantity of freezing times within 15 minutes (a display interval is greater than 100 ms) |
|---|---|---|---|
| No inter-channel interference | 57.7 | 0 | 3 |
| 200 Mbps | 51.6 | 8 | 88 |
| 150 Mbps | 54.7 | 0 | 41 |
| 50 Mbps | 57.1 | 0 | 4 |

In Table 3, the display interval may be understood as a time interval at which the electronic device controls a display to display two frames of pictures. It can be learned from Table 3 that, as the sending rate of the Wi-Fi chip 1 decreases, the projection frame rate of the peer device of the Wi-Fi chip 2 gradually increases, and a quantity of freezing times within 15 minutes gradually decreases, that is, communication quality of the Wi-Fi chip 2 is improved.

For example, in a simulation test scenario, as shown in FIG. 5, a sending rate of a Wi-Fi chip 1 is used as an example. As the sending rate of the Wi-Fi chip 1 decreases, a decrease ratio of an ultimate throughput rate of a Wi-Fi chip 2 gradually decreases. This also proves that the inter-channel interference manner provided in this embodiment of this application can improve communication quality of the Wi-Fi chip 2.

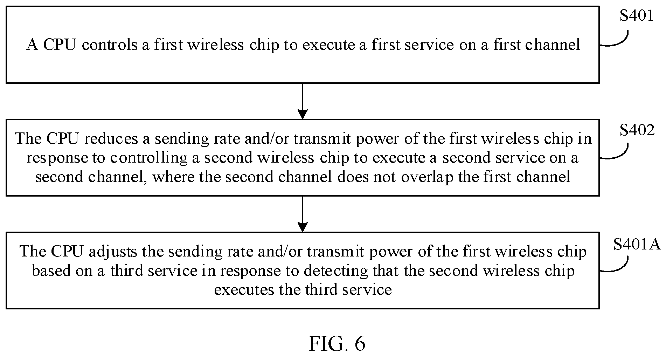

The foregoing embodiment describes a scenario in which the first wireless chip first executes the first service, and then the second wireless chip is powered on, to execute the second service. In an embodiment, in a scenario in which both the first wireless chip and the second wireless chip are in a working state, as shown in FIG. 6, S401A or S402A may be further included after S401 and S402. It should be understood that S401A is used as an example for description in FIG. 6.

S401A: The CPU adjusts the sending rate and/or transmit power of the first wireless chip based on a third service in response to detecting that the second wireless chip executes the third service.

S402A: The CPU adjusts a sending rate and/or transmit power of the second wireless chip based on the third service in response to detecting that the first wireless chip executes the third service.

The third service is different from the first service, and the third service is different from the second service. In this embodiment, if both the first wireless chip and the second wireless chip are in a working state, when the first wireless chip and the second wireless chip change an executed service, the CPU may adaptively adjust a transmit rate and/or transmit power of the wireless chip based on a changed service, to reduce inter-channel interference between the first wireless chip and the second wireless chip, and improve communication quality of the first wireless chip and the second wireless chip. It should be understood that, for adjusting, by the CPU, the sending rate and/or transmit power of the first wireless chip (or the second wireless chip) based on the third service and the foregoing Table 2, refer to related descriptions of the manner 2.

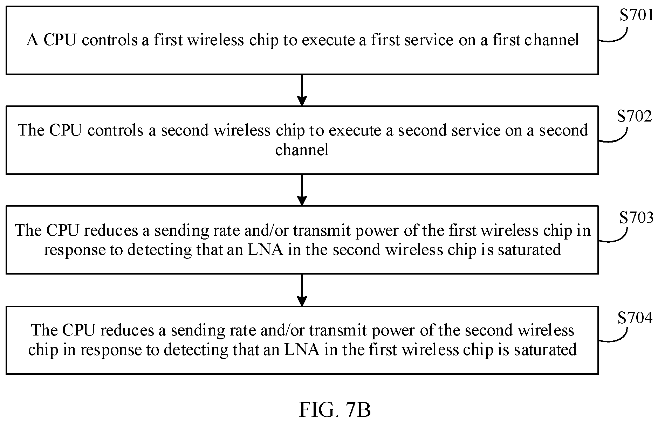

In the foregoing embodiment, the CPU may reduce a sending rate and/or transmit power of another wireless chip when a wireless chip starts to execute a service, or adjust a sending rate and/or transmit power of another wireless chip when a wireless chip changes an executed service, to reduce inter-channel interference between the two wireless chips. However, in a process in which the wireless chip executes a service, if an LNA in the wireless chip is saturated due to inter-channel interference, a signal received by the wireless chip is distorted, and a baseband chip cannot process the received signal. As a result, the electronic device cannot communicate with a peer device of the electronic device. Therefore, an embodiment of this application provides a chip mutual-interference processing method, so that inter-channel interference between wireless chips can be reduced in a more timely and effective manner, and communication quality of an electronic device can be ensured. For details, refer to descriptions in FIG. 7B.

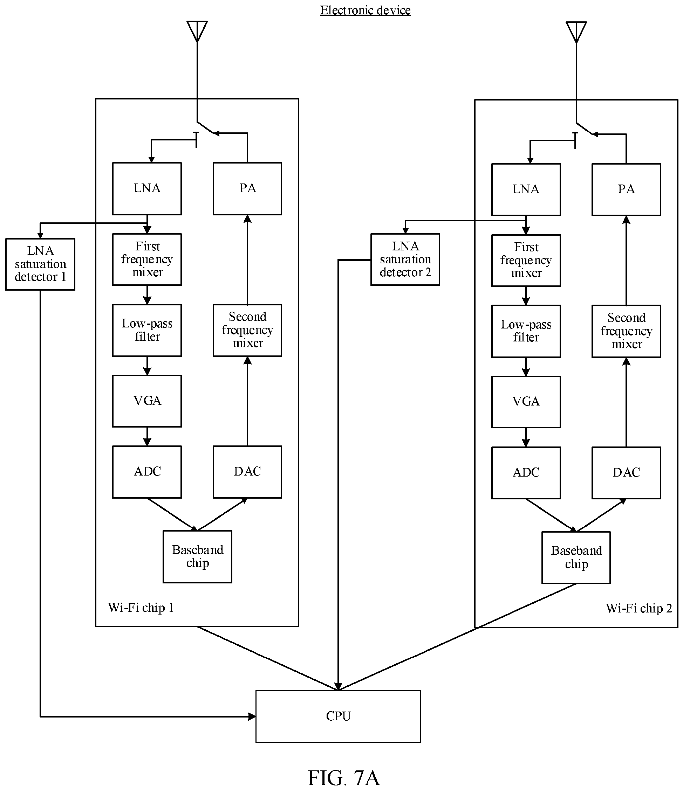

Before the chip mutual-interference processing method shown in FIG. 7B is described, another structure of the electronic device is first described. In an embodiment, compared with FIG. 3, the electronic device may further include an LNA saturation detector, and the LNA saturation detector is configured to detect whether an LNA in a wireless chip is saturated. For example, FIG. 3 may be replaced with FIG. 7A. As shown in FIG. 7A, the electronic device includes an LNA saturation detector 1 and an LNA saturation detector 2. A first end of the LNA saturation detector 1 is connected to an output end of an LNA in a Wi-Fi chip 1, a second end of the LNA saturation detector 1 is connected to a CPU, a first end of the LNA saturation detector 2 is connected to an output end of an LNA in a Wi-Fi chip 2, and a second end of the LNA saturation detector 2 is connected to the CPU. The LNA saturation detector 1 is configured to detect whether the LNA in the Wi-Fi chip 1 is saturated, and the LNA saturation detector 2 is configured to detect whether the LNA in the Wi-Fi chip 2 is saturated.

The LNA saturation detector 1 is used as an example to describe a manner in which the LNA saturation detector 1 detects whether the LNA in the Wi-Fi chip 1 is saturated. The LNA saturation detector 1 may detect signal strength of a radio frequency signal output by the LNA in the Wi-Fi chip 1, and compare the signal strength of the radio frequency signal output by the LNA with first preset signal strength, to determine whether the LNA in the Wi-Fi chip 1 is saturated. In an embodiment, the first preset signal strength may be -15 dBm.

If the signal strength of the radio frequency signal output by the LNA in the Wi-Fi chip 1 is greater than or equal to the first preset signal strength, the LNA saturation detector 1 determines that the LNA in the Wi-Fi chip 1 is saturated. The LNA saturation detector 1 may output, to the CPU, information indicating that the LNA in the Wi-Fi chip 1 is saturated. For example, the LNA saturation detector 1 may feed back a high-level signal to the CPU or may feed back information carrying an identifier 1 to the CPU. The identifier 1 indicates that the LNA in the Wi-Fi chip 1 is saturated. Correspondingly, the CPU may determine that the LNA in the Wi-Fi chip 1 is saturated in response to receiving the information indicating that the LNA in the Wi-Fi chip 1 is saturated.

Based on the structure of the electronic device shown in FIG. 7A, FIG. 7B is a schematic flowchart of another embodiment of a chip mutual-interference processing method according to an embodiment of this application. As shown in FIG. 7B, the chip mutual-interference processing method provided in this embodiment of this application may include the following steps.

S701: A CPU controls a first wireless chip to execute a first service on a first channel.

S702: The CPU controls a second wireless chip to execute a second service on a second channel.

For S701 and S702, refer to related descriptions of S401 and S402.

S703: The CPU reduces a sending rate and/or transmit power of the first wireless chip in response to detecting that an LNA in the second wireless chip is saturated.

S704: The CPU reduces a sending rate and/or transmit power of the second wireless chip in response to detecting that an LNA in the first wireless chip is saturated.

There is no sequence between S703 and S704, and S703 and S704 may be performed simultaneously.

It should be understood that a manner of detecting, by the CPU, that the LNA in the first wireless chip is saturated is the same as a manner of detecting that the LNA in the second wireless chip is saturated, and a manner of reducing, by the CPU, the sending rate and/or transmit power of the first wireless chip is the same as a manner of reducing the sending rate and/or transmit power of the second wireless chip. The following uses S703 as an example for description.

Refer to the related description in FIG. 7A. The CPU may determine, based on information from the LNA saturation detector in the second wireless chip, that the LNA in the second wireless chip is saturated. The CPU may determine that inter-channel interference between the first wireless chip and the second wireless chip is serious in response to that the LNA in the second wireless chip is saturated, and may reduce the sending rate and/or transmit power of the first wireless chip, to reduce the inter-channel interference between the first wireless chip and the second wireless chip. For a manner of reducing, by the CPU, the sending rate and/or transmit power of the first wireless chip, refer to related descriptions in the manner 1 and manner 2 in S402.

In an embodiment, to ensure accuracy of detecting that the LNA in the second wireless chip is saturated, S703 may be replaced with S703A.

S703A: The CPU reduces a sending rate and/or transmit power of the first wireless chip in response to detecting that a quantity of times that an LNA in the second wireless chip is saturated reaches a preset quantity of times.

In a scenario in which the first wireless chip and the second wireless chip simultaneously work, to avoid that power consumption of the CPU is reduced because the CPU adjusts the sending rate and/or transmit power of the first wireless chip too frequently, in this embodiment of this application, the CPU may determine the quantity of times that the LNA in the second wireless chip is saturated based on a quantity of times of LNA saturation information fed back by the LNA saturation detector in the second wireless chip. Further, the CPU reduces the sending rate and/or transmit power of the first wireless chip in response to detecting that the quantity of times that the LNA in the second wireless chip is saturated reaches the preset quantity of times. It should be understood that the quantity of times of LNA saturation information fed back by the LNA saturation detector in the second wireless chip is greater than or equal to the quantity of times that the LNA in the second wireless chip is saturated.

In this embodiment of this application, when detecting that the LNA in one wireless chip in the electronic device is saturated, the CPU may reduce a sending rate and/or transmit power of another wireless chip, to reduce inter-channel interference between the two wireless chips. Compared with the embodiment shown in FIG. 4 in which inter-channel interference processing is performed when a wireless chip changes a service, inter-channel interference processing in this embodiment of this application is more timely. This can improve efficiency of the inter-channel interference processing.

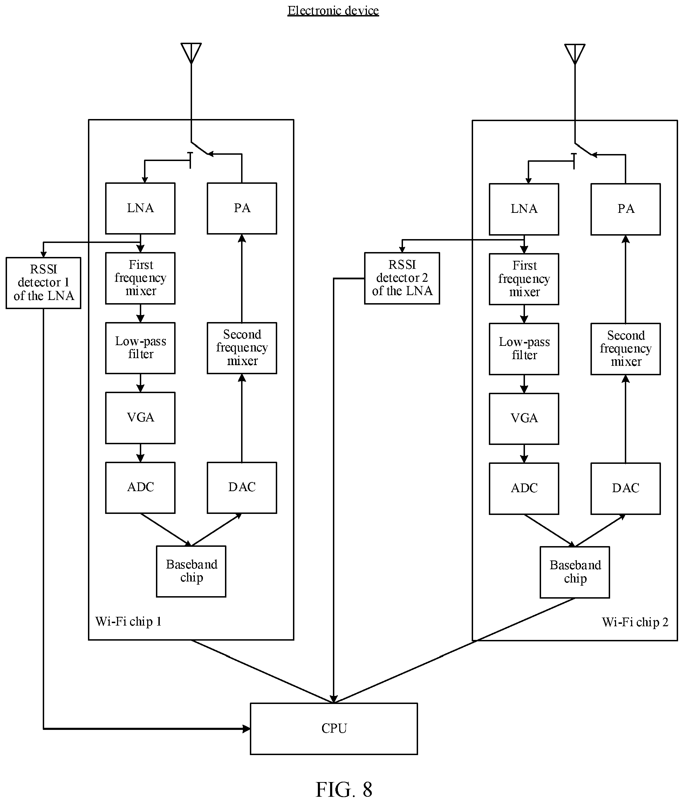

In an embodiment, compared with FIG. 3, the electronic device may further include an RSSI detector of the LNA, and the RSSI detector of the LNA is configured to detect an RSSI of the LNA in a wireless chip. For example, FIG. 3 may be replaced with FIG. 8. As shown in FIG. 8, an electronic device includes an RSSI detector 1 of an LNA and an RSSI detector 2 of an LNA. A first end of the RSSI detector 1 of the LNA is connected to the LNA in a Wi-Fi chip 1, a second end of the RSSI detector 1 of the LNA is connected to a CPU, a first end of the RSSI detector 2 of the LNA is connected to the LNA in a Wi-Fi chip 2, and a second end of the RSSI detector 2 of the LNA is connected to the CPU. The RSSI detector 1 of the LNA is configured to detect an RSSI of the LNA in the Wi-Fi chip 1, and the RSSI detector 2 of the LNA is configured to detect an RSSI of the LNA in the Wi-Fi chip 2.

In an embodiment, the first end of the RSSI detector 1 of the LNA may be connected to an input end or an output end of the LNA in the Wi-Fi chip 1. Correspondingly, the first end of the RSSI detector 2 of the LNA may be connected to an input end or an output end of the LNA in the Wi-Fi chip 2. FIG. 8 is described by using an example in which "the first end of the RSSI detector 1 of the LNA may be connected to the output end of the LNA in the Wi-Fi chip 1, and the first end of the RSSI detector 2 of the LNA may be connected to the output end of the LNA in the Wi-Fi chip 2".

The RSSI detector 1 of the LNA is used as an example. The RSSI detector 1 of the LNA may detect an RSSI of the LNA in the Wi-Fi chip 1 in real time, and send the RSSI of the LNA in the Wi-Fi chip 1 to the CPU, or the CPU may read, in real time, an RSSI of the LNA in the Wi-Fi chip 1 collected by the RSSI detector 1 of the LNA.

In this embodiment, S703 may be replaced with S703B or S703C.

S703B: The CPU reduces, based on an RSSI of an LNA in the second wireless chip, a sending rate and/or transmit power of the first wireless chip if determining that the LNA in the second wireless chip is saturated.

S703C: The CPU reduces, based on an RSSI of an LNA in the second wireless chip, a sending rate and/or transmit power of the first wireless chip if determining that a quantity of times that the LNA in the second wireless chip is saturated reaches a preset quantity of times.

It should be understood that, for a manner in which the CPU determines, based on the RSSI of the LNA in the second wireless chip, that the LNA in the second wireless chip is saturated, refer to related descriptions of detecting LNA saturation by the LNA saturation detector in FIG. 7A.

In this embodiment, the CPU may detect, based on an RSSI of the LNA in a wireless chip, whether the LNA in the wireless chip is saturated, so that the CPU may reduce a sending rate and/or transmit power of another wireless chip in response to RSSI saturation of the LNA in the wireless chip. This also achieves an objective of processing inter-channel interference in a more timely manner and improving efficiency of processing the inter-channel interference.

Refer to the structure of the electronic device shown in FIG. 8. The CPU may reduce, based on an RSSI of a wireless chip, a sending rate and/or transmit power of another wireless chip when detecting that an LNA in the wireless chip is saturated. In this way, inter-channel interference between the two wireless chips can be reduced, but accuracy of processing the inter-channel interference is still low. In this embodiment of this application, based on the structure of the electronic device shown in FIG. 8, the CPU may adaptively adjust the sending rate and/or transmit power of the first wireless chip based on the RSSI of the second wireless chip and the second service of the second wireless chip, to improve accuracy of processing inter-channel interference.

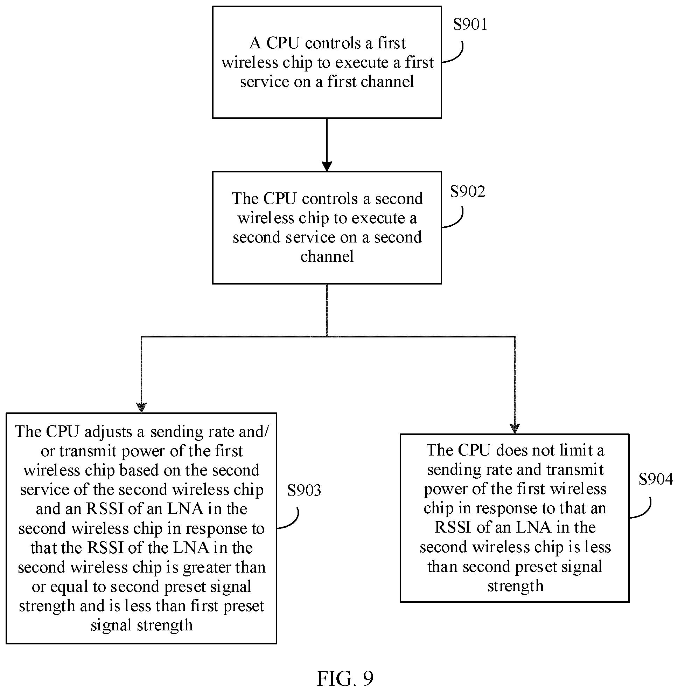

As shown in FIG. 9, in this embodiment, a chip mutual-interference processing method provided in this embodiment of this application may include the following steps.

S901: A CPU controls a first wireless chip to execute a first service on a first channel.

S902: The CPU controls a second wireless chip to execute a second service on a second channel.

For S901 and S902, refer to related descriptions of S401 and S402.

S903: The CPU adjusts a sending rate and/or transmit power of the first wireless chip based on the second service of the second wireless chip and an RSSI of an LNA in the second wireless chip in response to that the RSSI of the LNA in the second wireless chip is greater than or equal to second preset signal strength and is less than first preset signal strength.

The second preset signal strength is less than the first preset signal strength. For example, the second preset signal strength is -40 dBm. In this embodiment of this application, the second preset signal strength is set to be less than the first preset signal strength because the first preset signal strength is signal strength indicating that the LNA is saturated. For example, the first preset signal strength is -10 dBm. To prevent inter-channel interference between the first wireless chip and the second wireless chip when the LNA is not saturated (for example, -10 dBm to -40 dBm), the CPU in this embodiment of this application may adaptively adjust the sending rate and/or transmit power of the first wireless chip, to reduce the inter-channel interference between the first wireless chip and the second wireless chip, and improve processing accuracy and processing precision.

In an embodiment, the CPU may pre-store a mapping relationship among an RSSI of an LNA, a service, and a sending rate and/or transmit power "in a scenario in which the RSSI of the LNA is greater than or equal to the second preset signal strength and less than the first preset signal strength". The CPU may determine the sending rate and/or transmit power of the first wireless chip based on the second service of the second wireless chip, the RSSI of the LNA in the second wireless chip, and the mapping relationship, to adjust the sending rate and/or transmit power of the first wireless chip.

For example, for the mapping relationship among an RSSI of an LNA, a service, and a sending rate and/or transmit power, refer to the following Table 4. It should be understood that the following Table 4 is described by using "a mapping relationship among an RSSI of an LNA, a service, and a sending rate and transmit power" as an example.

**Table 4**

| RSSI of an LNA | Sending rate and transmit power of a 60 fps projection service | Sending rate and transmit power of a file transfer service | Keepalive sending rate and transmit power | ... |
|---|---|---|---|---|
| ≥ -10 dBm | Sending rate x 20% and transmit power - 12 dB | Sending rate x 50% and transmit power - 6 dB | Sending rate x 90% | ... |
| -10 dBm to -20 dBm | Sending rate x 40% and transmit power - 9 dB | Sending rate x 75% and transmit power - 3 dB | Unlimited sending rate and transmit power | ... |
| -20 dBm to -30 dBm | Sending rate x 60% and transmit power - 6 dB | Sending rate x 90% | Unlimited sending rate and transmit power | ... |
| -30 dBm to -40 dBm | Sending rate x 80% and transmit power - 3 dB | Unlimited sending rate and transmit power | Unlimited sending rate and transmit power | ... |
| < -40 dBm | Unlimited sending rate and transmit power | Unlimited sending rate and transmit power | Unlimited sending rate and transmit power | ... |

It should be understood that, in Table 4, an example in which the LNA is not saturated (for example, -10 dBm to -40 dBm) and intervals of RSSIs of LNAs at all levels are equal is used for description. For example, if an interval of RSSIs of LNAs at a level of "-10 dBm to -20 dBm" is 10 dBm, an interval of RSSIs of LNAs at a level of "-20 dBm to -30 dBm" is also 10 dBm. An interval of RSSIs of LNAs at each level is a difference between a maximum RSSI and a minimum RSSI.

In an embodiment, intervals of RSSIs of LNAs at all levels in Table 4 may also be unequal. For example, Table 4 may be replaced with Table 5.

**Table 5**

| RSSI of an LNA | Sending rate and transmit power of a 60 fps projection service | Sending rate and transmit power of a file transfer service | Keepalive sending rate and transmit power | ... |
|---|---|---|---|---|
| ≥ -10 dBm | Sending rate x 20% and transmit power - 12 dB | Sending rate x 50% and transmit power - 6 dB | Sending rate x 90% | ... |
| -10 dBm to -25 dBm | Sending rate x 40% and transmit power - 9 dB | Sending rate x 75% and transmit power - 3 dB | Unlimited sending rate and transmit power | ... |
| -25 dBm to -30 dBm | Sending rate x 60% and transmit power - 6 dB | Sending rate x 90% | Unlimited sending rate and transmit power | ... |
| -30 dBm to -40 dBm | Sending rate x 80% and transmit power - 3 dB | Unlimited sending rate and transmit power | Unlimited sending rate and transmit power | ... |
| < -40 dBm | Unlimited sending rate and transmit power | Unlimited sending rate and transmit power | Unlimited sending rate and transmit power | ... |

For example, in Table 5, an interval of RSSIs of LNAs at a level of "-10 dBm to -25 dBm" is 15 dBm, an interval of RSSIs of LNAs at a level of "-25 dBm to -30 dBm" is 5 dBm, and an interval of RSSIs of LNAs at a level of "-30 dBm to -40 dBm" is 10 dBm.

S904: The CPU does not limit the sending rate and transmit power of the first wireless chip in response to that the RSSI of the LNA in the second wireless chip is less than the second preset signal strength.

For "the CPU does not limit the sending rate and transmit power of the first wireless chip", refer to the related description in S401. It should be understood that S903 and S904 are alternatively performed steps.

It should be understood that, when the RSSI of the LNA in the second wireless chip is greater than or equal to the first preset signal strength, the CPU may determine that the LNA in the second wireless chip is saturated, and the CPU may perform S703B or S703C.

It should be understood that this embodiment of this application may further include the following steps.

S903A: The CPU adjusts a sending rate and/or transmit power of the second wireless chip based on the first service of the first wireless chip and an RSSI of an LNA in the first wireless chip in response to that the RSSI of the LNA in the first wireless chip is greater than or equal to the second preset signal strength and is less than the first preset signal strength.

S904A: The CPU does not limit the sending rate and transmit power of the second wireless chip in response to that the RSSI of the LNA in the first wireless chip is less than the second preset signal strength.

In other words, in this embodiment of this application, the CPU may adaptively adjust a sending rate and/or transmit power of another wireless chip based on an RSSI and a service of an LNA in a wireless chip.

For S903A and S904A, refer to related descriptions of S903 and S904.

In this embodiment of this application, when the RSSI of the LNA in the second wireless chip is greater than or equal to the second preset signal strength and is less than the first preset signal strength, the CPU may adaptively adjust the sending rate and/or transmit power of the first wireless chip based on the second service of the second wireless chip and the RSSI of the LNA in the second wireless chip. In this embodiment of this application, when the LNA in the second wireless chip is not saturated, the CPU may adjust the sending rate and/or transmit power of the first wireless chip more accurately based on the RSSI of the LNA in the second wireless chip, and may further reduce inter-channel interference between the first wireless chip and the second wireless chip when the LNA in the second wireless chip is not saturated. This improves processing precision and accuracy of the inter-channel interference.

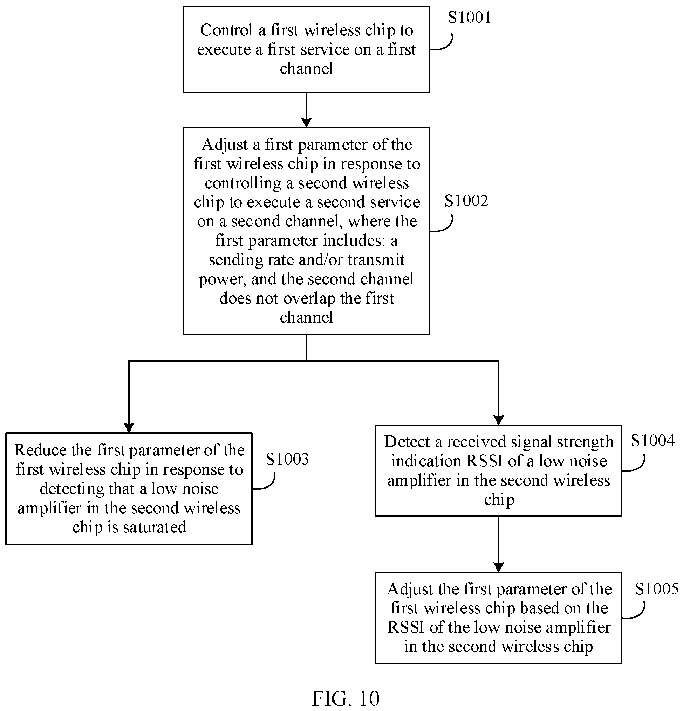

In an embodiment, the structure of the electronic device may be shown in FIG. 3, FIG. 7A, or FIG. 8. As shown in FIG. 10, for the electronic device, a chip mutual-interference processing method provided in this embodiment of this application may include the following steps.

S1001: Control a first wireless chip to execute a first service on a first channel.

For S1001, refer to related descriptions in S401.

S1002: Adjust a first parameter of the first wireless chip in response to controlling a second wireless chip to execute a second service on a second channel, where the first parameter includes: a sending rate and/or transmit power, and the second channel does not overlap the first channel.

In an embodiment, that the electronic device controls the second wireless chip to execute the second service on the second channel may be understood as that the electronic device powers on the second wireless chip, so that the second wireless chip switches from a state of not executing a service to a state of executing the second service. That the electronic device adjusts the first parameter of the first wireless chip may be that the electronic device reduces the sending rate and/or transmit power of the first wireless chip. For details, refer to the related description of S402.

In an embodiment, that the electronic device controls the second wireless chip to execute the second service on the second channel may be understood as that the electronic device controls the second wireless chip to switch from a state of executing another service to a state of executing the second service. That the electronic device adjusts the first parameter of the first wireless chip may be that the electronic device may adaptively adjust the first parameter of the first wireless chip based on the second service and a mapping relationship between a second service and a first parameter. For details, refer to related descriptions of S401A and S402A.

For a manner in which the electronic device reduces the first parameter of the first wireless chip and adjusts the first parameter of the first wireless chip, refer to related descriptions in the foregoing embodiment.

In an embodiment, refer to the structure of the electronic device shown in FIG. 7A. In this embodiment, the chip mutual-interference processing method provided in this embodiment of this application may further include the following step.

S1003: Reduce the first parameter of the first wireless chip in response to detecting that a low noise amplifier in the second wireless chip is saturated.

For S1003, refer to related descriptions in S703 and S703A. It should be understood that there is no sequence between S1003 and S1002, and S1003 and S1002 may be performed simultaneously.

In an embodiment, refer to the structure of the electronic device shown in FIG. 8. In this embodiment, the chip mutual-interference processing method provided in this embodiment of this application may further include the following steps.

S1004: Detect a received signal strength indication RSSI of a low noise amplifier in the second wireless chip.

S1005: Adjust the first parameter of the first wireless chip based on the RSSI of the low noise amplifier in the second wireless chip.

In this embodiment, the electronic device reduces the first parameter of the first wireless chip in response to that the RSSI of the low noise amplifier in the second wireless chip is greater than or equal to first preset signal strength. For details, refer to related descriptions in S703B and S703C.

Alternatively, the electronic device adjusts the first parameter of the first wireless chip based on the RSSI of the low noise amplifier in the second wireless chip, the second service, and a mapping relationship among an RSSI, a service, and a first parameter in response to that the RSSI of the low noise amplifier in the second wireless chip is greater than or equal to second preset signal strength and is less than first preset signal strength. For details, refer to related descriptions in S903.

Alternatively, the electronic device does not limit the sending rate and transmit power of the first wireless chip in response to that the RSSI of the LNA in the second wireless chip is less than second preset signal strength. For details, refer to related descriptions in S904. It should be understood that there is no sequence between S1003 and S1002, and between "S1004 and S1005", and S 1003 and S1002, and "S1004 and S1005" may be performed simultaneously.

For implementation principles and technical effects of the chip mutual-interference processing method in this embodiment of this application, refer to related descriptions in the foregoing embodiments.

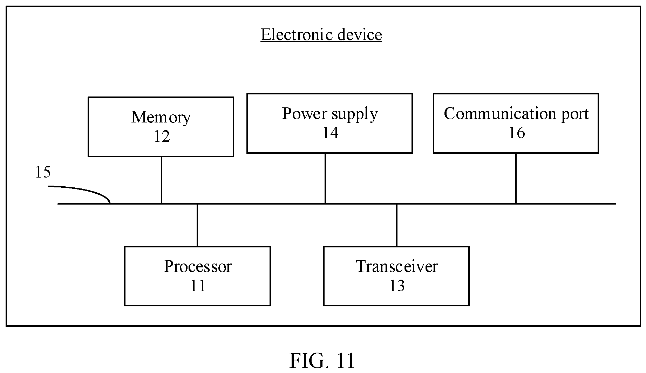

FIG. 11 is a schematic diagram of another structure of an electronic device according to an embodiment of this application. As shown in FIG. 11, the electronic device may include a processor 11, a memory 12, and at least two transceivers 13 (it should be understood that one transceiver is shown in the figure). The transceiver 13 is coupled to the processor 11, and the processor 11 controls an action of receiving and sending a signal by the transceiver 13. In an embodiment, the processor may be understood as the CPU in the foregoing embodiment, and the transceiver 13 may be understood as the wireless chip in the foregoing embodiment.

The memory 12 may include a high-speed random access memory (random access memory, RAM), or may further include a non-volatile memory (non-volatile memory, NVM), for example, at least one magnetic disk memory. The memory 12 may store various instructions, to complete various processing functions and implement method steps in this application. Optionally, the electronic device in this application may further include a power supply 14, a communication bus 15, and a communication port 16. The transceiver 13 may be integrated into a transceiver machine of the electronic device, or may be an independent transceiver antenna of the electronic device. The communication bus 15 is configured to implement a communication connection between components. The communication port 16 is configured to implement connection and communication between the electronic device and another peripheral.

In this embodiment of this application, the memory 12 is configured to store computer-executable program code, and the program code includes instructions. When the processor 11 executes the instructions, the instructions enable the processor 11 of the electronic device to perform an action of the CPU in the foregoing method embodiment, and enable the transceiver 13 to perform an action of the wireless chip in the foregoing method embodiment. Implementation principles and technical effects thereof are similar, and details are not described herein again.

In the foregoing embodiments, components such as the LNA saturation detector and the RSSI detector of an LNA in the electronic device may be completely or partially implemented by using software, hardware, firmware, or any combination thereof. When software is used for implementation, the implementation may be totally or partially implemented in a form of a computer program product. The computer program product includes one or more computer instructions. When computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device like a server or a data center integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

The term "a plurality of" in this specification means two or more. The term "And/or" in this specification is merely an association relationship for describing associated objects, and indicates that three relationships may exist. For example, A and/or B may indicate that only A exists, both A and B exist, and only B exists. In addition, the character "/" in this specification generally indicates that associated objects are in an "or" relationship. In the formula, the character "/" indicates that associated objects are divided by each other. In addition, it should be understood that, in the descriptions of this embodiment of this application, words such as "first" and "second" are merely intended for a purpose of differentiated description, and cannot be understood as an indication or an implication of relative importance, or an indication or an implication of a sequence.

It may be understood that various numerals used in embodiments of this application are merely distinguished for ease of description, but are not intended to limit the scope of embodiments of this application.

It may be understood that, in various embodiments of this application, sequence numbers of the foregoing processes do not mean an execution sequence. The execution sequence of the processes should be determined based on functions and internal logic of the processes, and does not constitute any limitation on the implementation processes of embodiments of this application.

## Claims

1. A chip mutual-interference processing method, applied to an electronic device, wherein the electronic device comprises a first wireless chip and a second wireless chip, and the method comprises:
controlling the first wireless chip to execute a first service on a first channel; and
adjusting a first parameter of the first wireless chip in response to controlling the second wireless chip to execute a second service on a second channel, wherein the first parameter comprises: a sending rate and/or transmit power, and the second channel does not overlap the first channel.

2. The method according to claim 1, wherein the adjusting a first parameter of the first wireless chip in response to controlling the second wireless chip to execute a second service on a second channel comprises:
controlling the second wireless chip to start to execute the second service on the second channel, and reducing the first parameter of the first wireless chip in response to powering on the second wireless chip.

3. The method according to claim 1 or 2, wherein after the adjusting a first parameter of the first wireless chip, the method further comprises:
reducing the first parameter of the first wireless chip in response to detecting that a low noise amplifier in the second wireless chip is saturated.

4. The method according to claim 1, wherein after the adjusting a first parameter of the first wireless chip, the method further comprises:
detecting a received signal strength indication RSSI of a low noise amplifier in the second wireless chip; and
adjusting the first parameter of the first wireless chip based on the RSSI of the low noise amplifier in the second wireless chip.

5. The method according to claim 4, wherein the adjusting the first parameter of the first wireless chip based on the RSSI of the low noise amplifier in the second wireless chip comprises:
reducing the first parameter of the first wireless chip in response to that the RSSI of the low noise amplifier in the second wireless chip is greater than or equal to first preset signal strength.

6. The method according to claim 2, 3, or 5, wherein the reducing the first parameter of the first wireless chip comprises:
reducing the first parameter of the first wireless chip based on the second service and a mapping relationship between a service and a first parameter.

7. The method according to claim 4, wherein the adjusting the first parameter of the first wireless chip based on the RSSI of the low noise amplifier in the second wireless chip comprises:
adjusting the first parameter of the first wireless chip based on the RSSI of the low noise amplifier in the second wireless chip, the second service, and a mapping relationship among an RSSI, a service, and a first parameter in response to that the RSSI of the low noise amplifier in the second wireless chip is greater than or equal to second preset signal strength and is less than first preset signal strength, wherein the second preset signal strength is less than the first preset signal strength.

8. The method according to any one of claims 1 to 7, wherein both the first wireless chip and the second wireless chip are Wi-Fi chips.

9. A chip mutual-interference processing apparatus, comprising: a processor, a memory, a first wireless chip, and a second wireless chip, wherein the processor is separately connected to the first wireless chip and the second wireless chip;
the memory stores computer-executable instructions; and
the processor is configured to execute the computer-executable instructions stored in the memory, so that the processor performs the method according to any one of claims 1 to 8.

10. A computer-readable storage medium, wherein the computer-readable storage medium stores a computer program or instructions, and when the computer program or the instructions is/are run, the method according to any one of claims 1 to 8 is implemented.

11. A computer program product, comprising a computer program or instructions, wherein when the computer program or the instructions is/are executed by a processor, the method according to any one of claims 1 to 8 is implemented.

12. A program product, wherein the program product comprises a computer program, the computer program is stored in a readable storage medium, at least one processor of a communication apparatus may read the computer program from the readable storage medium, and the at least one processor executes the computer program, so that the communication apparatus implements the method according to any one of claims 1 to 8.
